# EUROPÄISCHE PATENTSCHRIFT

(11) **EP 0 679 568 B1**
(45) Veröffentlichungstag und Bekanntmachung des Hinweises auf die Patenterteilung: **07.07.1999**
(21) Anmeldenummer: 95106330.4
(22) Anmeldetag: 27.04.1995
(51) Int. Cl.: B62K 5/04, B62K 21/00

(54) **Dreiradfahrzeug**
Three wheeled vehicle
Véhicule à trois roues

(30) Priorität: 30.04.1994 DE 4415260
(43) Veröffentlichungstag der Anmeldung: 02.11.1995
(73) Patentinhaber: Beese, Otto, D-98574 Schmalkalden (DE)
(72) Erfinder: Beese, Otto, D-98574 Schmalkalden (DE)
(74) Vertreter: Liedtke, Klaus, Dr.

(56) Entgegenhaltungen:
- EP-A- 0 321 171
- DE-A- 3 005 169
- DE-A- 3 727 771
- DE-C- 822 208
- FR-E- 50 497

## Beschreibung

Die Erfindung betrifft ein Dreiradfahrzeug mit einem vorderen Rahmen zur Halterung eines Vorderrades und eines Lenkers, einem hinteren Rahmen zur Halterung von zwei Hinterrädern, wobei der vordere Rahmen und der hintere Rahmen mit einem Drehgelenk verbunden sind, sowie mindestens einem Sitz. Der Oberbegriff des Anspruchs 1 wird von den Dokumenten FR-E-50 497 und DE-C-822 208 gezeigt.

Dreiradfahrzeuge sind im Stand der Technik sowohl für Muskelantrieb als auch für Motorantrieb in verschiedenen Bauformen bekannt.

Nach DE-OS 30 05 169 ist ein Dreiradfahrzeug bekannt, bei dem ein Fahrzeugkörper, zu dem ein vorderer Rahmen zum Unterstützen eines Vorderrades und ein hinterer Rahmen zum Unterstützen eines rechten und eines linken Hinterrades gehören, bei dem die Hinterräder auf einer gemeinsamen Querachse angeordnet sind und bei dem der vordere und der hintere Rahmen durch ein Gelenk so miteinander verbunden sind, daß es dem vorderen Rahmen möglich ist, Schwenkbewegungen um eine waagerechte Drehachse zur einen oder anderen Seite um die Drehachse des Gelenks auszuführen.

Das Gelenk ermöglicht hierbei eine Bewegung der beiden Rahmenteile zum Ausgleich von Fahrbahnunebenheiten. Die Lenkung des Fahrzeuges erfolgt dadurch, daß das Vorderrad in einer Vorderradgabel gelagert ist, die wiederum in einem rohrförmigen Kopf drehbar gelagert ist.

Bei diesen Dreiradfahrzeugen ist nachteilig, daß sie einen verhältnismäßig großen Radstand aufweisen, der eine große Baulänge erfordert und deshalb nur eine eingeschränkte Manövrierfähigkeit des Fahrzeuges gestattet.

Zur Verbesserung der Fahrdynamik, insbesondere zur Verbesserung des Kurvenverhaltens, sind im Stand der Technik verschiedene Lösungen bekannt.

Den Nachteil, daß Dreiradfahrzeuge beim Verschwenken der gelenkten Teile Schwierigkeiten verursachen, insbesondere wenn scharf eingeschlagen werden soll, versucht die in DE 822 208 beschriebene Anordnung für ein Dreiradfahrzeug dadurch zu umgehen, daß der Sattel an einem das Vorderrad und die Lenkstange tragenden Lenkgestell sitzt. Dadurch dreht sich der Fahrer zusammen mit dem Lenkrad und den an diesem sitzenden Tretkurbeln. In diesem Fall bleibt zwar die Lage des Fahrers auch beim Einschlagen gegenüber dem angetriebenen Lenkrad gleich, schnelle Kurvenfahrten bergen jedoch trotzdem die Gefahr des Umkippens, weil der Fahrersitz relativ hoch angeordnet ist, so daß sich eine hohe Schwerpunktslage ergibt und der Schwerpunktes beim Schwenken aus dem Stabilitätsbereich heraus verlagert wird.

Im Stand der Technik ist es weiterhin bekannt, bei Dreiradfahrzeugen, bei denen das Vorderrad angetrieben wird, die Lenkung durch ein unter dem Sitz des Fahrers angeordnetes Lager zu ermöglichen, wobei dieses Lager den vorderen Rahmen und den hinteren Rahmen gelenkig verbindet. Dabei ist nachteilig, daß der Fahrer sich an Haltegriffen am Sitz festhalten oder freihändig fahren muß, so daß die Handhabung dieses Fahrzeuges nur mit Mühe möglich ist. Außerdem ermöglicht diese Fahrzeuggestaltung auch keine Schwerpunktverlagerung des Fahrers beim Kurvenfahren, so daß auch hier die Gefahr des Umkippens beim schnellen Kurvenfahren besteht.

Der Erfindung liegt die Aufgabe zugrunde, ein Dreiradfahrzeug anzugeben, das eine geringe Baulänge und eine hohe Manövrierfähigkeit aufweist.

Erfindungsgemäß gelingt die Aufgabe dadurch, daß der Sitz auf einem Schwenkarm angeordnet ist, der mit einem hinteren Schwenkarmgelenk mit dem hinteren Rahmen und mit einem vorderen Schwenkarmgelenk mit dem Lenker verbunden ist.
Dabei ist es vorteilhaft, das Drehgelenk so anzubringen, daß sich seine Drehachse innerhalb des Dreiecks befindet, das von den Mittelpunkten der drei Räder gebildet wird.
Dies ermöglicht für das Dreirad sowohl eine extrem kurze Bauweise als auch die Verwirklichung einer optimalen Fahrdynamik, bei der der Schwerpunkt des Fahrers beim Kurvenfahren nach innen verlagert wird, also in eine Richtung, die das Kurvenfahren unterstützt. Zusätzlich ergibt sich eine entsprechende Neigung des Fahrers.

Das Fahrzeug ist deshalb universell einsetzbar, es ist sowohl für Jugendliche - beispielsweise für Sportzwecke -, als auch für Erwachsene - beispielsweise als Einkaufsfahrzeug - und darüber hinaus auch für Behinderte gut geeignet.

Ferner ist es möglich, daß das Vorderrad mit einem Tretkurbelmechanismus verbunden ist, der vor dem Vorderrad angeordnet ist.
Der Antrieb des Vorderrades gestattet die Ausnutzung der Kniehebelwirkung beim Treten, wodurch eine hohe Kraft aufgebracht werden kann, die durch eine Sitzgestaltung mit Rückenanlage weiter unterstützt werden kann. Die Sitzstellung ist dabei entsprechend der Beinlänge stufenlos einstellbar.

Eine vorteilhafte Ausgestaltung des erfindungsgemäßen Dreirades sieht vor, daß am vorderen Rahmen ein Lenker angeordnet ist, dessen Drehbewegung mit Hilfe eines Übertragungsmechanismus in eine Schwenkbewegung des vorderen Rahmens gegenüber dem hinteren Rahmen übertragen wird.
Dabei ist es möglich, daß der Übertragungsmechanismus aus einem Seiltrieb besteht, wobei am Lenker eine Seiltrommel befestigt ist, am Drehgelenk eine Seilrolle und am vorderen Rahmen zwischen Drehgelenk und Seiltrommel eine Seilumlenkrolle angebracht ist und das Seil an einem Seilfestpunkt mit beiden Enden befestigt ist und von dort über die Seilrolle, Seilumlenkrolle und Seiltrommel und zurück geführt wird, wobei die beiden Seilabschnitte zwischen Seilrolle und Seilumlenkrolle über Kreuz verlaufen.

Da die Lenkung über ein Gelenk im Rahmen zwischen dem Radstand erfolgt, knickt bei der Lenkbetätigung, die über einen Seiltrieb vom Lenker auf das Drehgelenk übertragen wird, der Rahmen seitlich aus. Durch eine leicht schräge Anordnung der Drehachse gegenüber der Senkrechten, werden beim Kurvenfahren, bei der der vordere Rahmen ausschwenkt, Sitz und Vorderrad schräg in Richtung Innenkurve geneigt. Damit wird eine hohe Kurvenstabilität erreicht. Die Kurvenstabilität wird außerdem dadurch weiter erhöht, daß der Sitz auf einem Schwenkarm oberhalb von Vorder- und Hinterrahmen angeordnet ist. Dieser Schwenkarm ist über ein Drehgelenk mit dem Hinterrahmen schwenkbar um eine annähernd senkrechte Achse verbunden. Mit dem Vorderrahmen ist er am Lenker so verbunden, daß ein horizontaler Längenausgleich beim Lenken möglich ist. Dadurch wird das Ausschwenken der Sitzebene nach außen beim Lenken minimiert. Es ist auch möglich, den Schwenkarm über ein Drehgelenk mit dem Lenker zu verbinden und die Verbindungsstelle des Schwenkarms mit dem hinteren Rahmen als Dreh-Schub-Gelenk auszubilden.

Eine weitere vorteilhafte Ausgestaltung des erfindungsgemäßen Dreirades sieht vor, daß der hintere Rahmen lösbar mit dem Drehgelenk verbunden ist.

Dies ermöglicht eine leichte Demontage in zwei Baugruppen, was beispielsweise eine platzsparende Unterbringung ermöglicht. Außerdem kann das hintere Radteil als Transportwagen mit vielseitigem Zubehör verwendet werden.

Ferner ist es möglich, daß die Hinterräder so geneigt angeordnet sind, daß sie an der Unterseite einen größeren Abstand aufweisen als auf der Oberseite. Durch diese Gestaltung wird eine maximale Spurbreite und damit eine hohe Fahr- und Standsicherheit bei geringer Gesamtbreite erreicht.

Das erfindungsgemäße Dreirad weist eine Reihe von Vorteilen auf.
Vorteilhaft ist insbesondere die auch in Kurven wirksame erhöhte Standsicherheit durch den tiefliegenden Schwerpunkt. Weiterhin ermöglicht die niedrige Bauweise ein leichtes Auf- und Absteigen. Das bei Zweiradfahrzeugen erforderliche Balancieren entfällt, ebenso die Schlängelbewegungen beim Anfahren und bei niedrigen Geschwindigkeiten. Damit wird auch die Verkehrssicherheit erhöht. Das erfindungsgemäße Dreiradfahrzeug gestattet ein bequemes Sitzen durch die Anordnung von Sitzen mit Rückenlehne. Vorteilhaft ist weiterhin, daß im Stand unter Beibehaltung der sitzenden Haltung ein Boden-Fuß-Kontakt möglich ist.
Die sehr kurze und schmale Bauweise gewährleistet einen sehr geringen Wendekreis beim Fahren. Es sind Wendekreisdurchmesser von 2 m erreichbar, was praktisch einem Wenden auf der Stelle entspricht.

Das Dreirad ist als Freizeit- und Sportgerät sowie als Transportgerät in vielfältigen Formen einsetzbar.

Die Erfindung wird im folgenden anhand eines Ausführungsbeispiels näher erläutert. In der zugehörigen Zeichnung zeigen:
Figur 1 eine schematische Darstellung des erfindungsgemäßen Dreirads in Seitenansicht,
Figur 2 eine schematische Darstellung des erfindungsgemäßen Dreirads in Draufsicht und
Figur 3 eine schematische Darstellung des erfindungsgemäßen Dreirads in Draufsicht bei Kurvenfahrt.

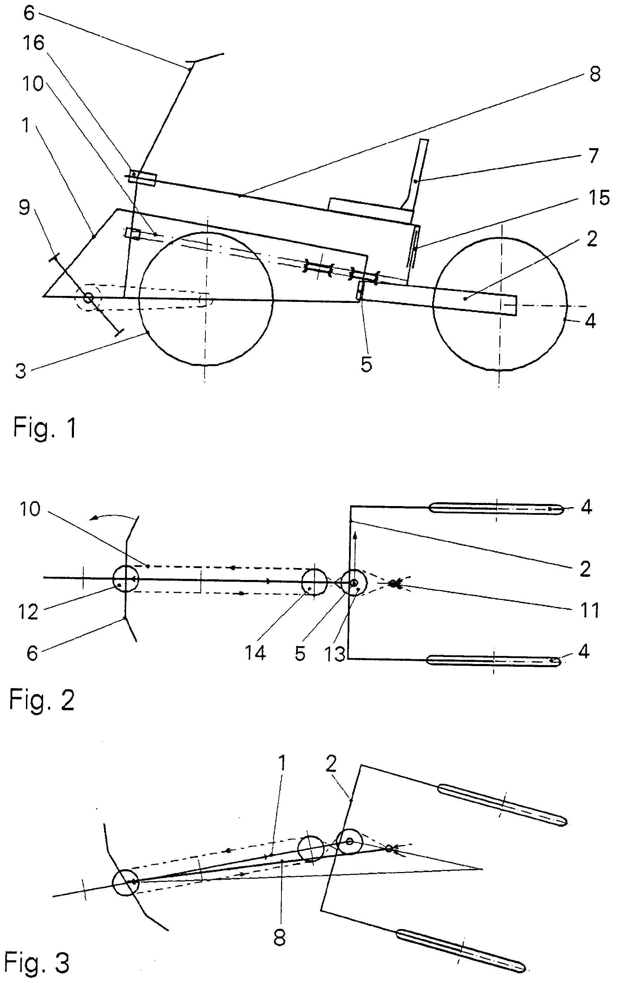

Aus Figur 1 ist die Benutzung des erfindungsgemäßen Dreirades ersichtlich. Der Fahrer befindet sich auf dem Sitz 7 und hält dabei seine Hände am Lenker 6. Das Vorderrad 3 wird von einem Tretkurbelmechanismus angetrieben. Die gewählte Sitzgestaltung mit Rückenlehne gestattet die Ausnutzung der vollen Beinmuskelkraft, die auf den Pedalarm 9 wirkt. Die Sitzstellung ist entsprechend der Beinlänge des Fahrers stufenlos einstellbar.

Die Figuren 2 und 3 veranschaulichen die Lenkgeometrie.
Die Lenkung erfolgt über ein Drehgelenk 5, das im Gestell zwischen dem Vorderrad 3 und den beiden Hinterrädern 4 angeordnet ist. Das Gestell besteht aus einem vorderen Rahmen 1 und einem hinteren Rahmen 2. Im vorderen Rahmen 1 ist das Vorderrad 3 gelagert, währen im hinteren Rahmen 2 die beiden Hinterräder 4 gelagert sind.
Zur Erzielung der maximalen Spurbreite können die Hinterräder 4 schräg angeordnet sein, so daß sie an der Fahrbahnseite einen größeren Abstand aufweisen als an der Oberseite.
Bei einer Lenkbetätigung schwenkt der vordere Rahmen 1 seitlich gegenüber dem hinteren Rahmen 2 aus. Die Lenkbewegung wird dabei über einen Seiltrieb vom Lenker 6 auf den vorderen Rahmen 1 übertragen. Der Übertragungsmechanismus besteht aus einem Seiltrieb, wobei am Lenker 6 eine Seiltrommel 12 und am Drehgelenk 5 eine Seilrolle 13 befestigt sind. Am vorderen Rahmen 1 ist zwischen Drehgelenk 5 und Seiltrommel 12 eine Seilumlenkrolle 14 angebracht. Das Seil 10 ist mit beiden Enden an einem Seilfestpunkt 11 befestigt und wird von dort über die Seilrolle 13 und die Seilumlenkrolle 14 zur Seiltrommel 12 und von dort wieder zurück geführt. Die Seilführung erfolgt dabei in der Weise, daß das Seil 10 zwischen Seilrolle 13 und Seilumlenkrolle 14 kreuzt.
Durch die nach hinten geneigte Anordnung der Drehachsen von Drehgelenk 5 und hinterem Schwenkarmgelenk 15 um ca. 22° gegenüber der Senkrechten wird erreicht, daß Sitz 7 und Vorderrad 3 beim Ausschwenken des vorderen Rahmens 1 eine Schrägstellung in die gewünschte Kurvenrichtung erfahren.
Der Sitz 7 ist auf einem schwenkarm 8 befestigt. Der Schwenkarm 8 ist mittels des hinteren Schwenkarmgelenks 15 mit dem hinteren Rahmen 2 um eine geneigte Achse schwenkbar. Die Verbindung des Schwenkarms 8 mit dem vorderen Rahmen 1 erfolgt über das vordere Schwenkarmgelenk 16, welches als Dreh-Schub-Gelenk zwischen dem Schwenkarm 8 und dem Lenker 6 angeordnet ist. Die Abmessungen sind dabei so gewählt, daß bei allen Lenkbewegungen das Ausschwenken des Sitzes 7 aus der Spurmitte der Hinterräder 4 minimiert wird. Im Zusammenwirken mit der Schrägstellung wird dadurch eine hohe Kurvenstabilität erreicht.

Der vorderen Rahmen 1 ist am hinteren Rahmen 2 durch eine hier nicht dargestellte lösbare Verbindung befestigt. Es ist möglich, die beiden Rahmenteile ohne Betätigungselemente und Werkzeuge zu verbinden. Dies wird dadurch erreicht, daß am hinteren Rahmen 2 ein Bolzen angeordnet ist, der in den vorderen Rahmen 1 formschlüssig eingreift und die auftretenden Kräfte und Momente überträgt. Das unbeabsichtigte Lösen wird durch eine zusätzliche Schraubverbindung verhindert.

### BEZUGSZEICHENLISTE

- 1: vorderer Rahmen
- 2: hinterer Rahmen
- 3: Vorderrad
- 4: Hinterrad
- 5: Drehgelenk
- 6: Lenker
- 7: Sitz
- 8: Schwenkarm
- 9: Pedalarm
- 10: Seil
- 11: Seilfestpunkt
- 12: Seiltrommel
- 13: Seilrolle
- 14: Seilumlenkrolle
- 15: hinteres Schwenkarmgelenk
- 16: vorderes Schwenkarmgelenk

## Patentansprüche

1. Dreiradfahrzeug mit einem vorderen Rahmen (1) zur Halterung eines Vorderrades (3) und eines Lenkers (6), einem hinteren Rahmen (2) zur Halterung von zwei Hinterrädern (4), wobei der vordere Rahmen (1) und der hintere Rahmen (2) mit einem Drehgelenk (5) verbunden sind, sowie mindestens einem Sitz (7), **dadurch gekennzeichnet, daß** der Sitz (7) auf einem Schwenkarm (8) angeordnet ist, der mit einem hinteren Schwenkarmgelenk (15) mit dem hinteren Rahmen (2) und mit einem vorderen Schwenkarmgelenk (16) mit dem Lenker (6) verbunden ist.

2. Dreiradfahrzeug nach Anspruch 1, **dadurch gekennzeichnet, daß** das hintere Schwenkarmgelenk (15) als Drehgelenk und das vordere Schwenkarmgelenk (16) als Drehschubgelenk ausgebildet sind.

3. Deiradfahrzeug nach Anspruch 2, **dadurch gekennzeichnet, daß** das Drehgelenk (5) und das hintere Schwenkarmgelenk (15) so angebracht sind, daß sich ihre Drehachsen innerhalb des Dreiecks befinden, das die Mittelpunkte der drei Räder verbindet und daß die Drehachsen nach hinten geneigt sind.

4. Dreiradfahrzeug nach einem der Ansprüche 1 bis 3, **dadurch gekennzeichnet, daß** das Vorderrad (3) mit einem Tretkurbelmechanismus verbunden ist, der vor dem Vorderrad (3) angeordnet ist.

5. Dreiradfahrzeug nach einem der Ansprüche 1 bis 4, **dadurch gekennzeichnet, daß** die Lenkbewegung des Lenkers (6) mit Hilfe eines Übertragungsmechanismus in eine Schwenkbewegung des vorderen Rahmens gegenüber dem hinteren Rahmen übertragen wird.

6. Dreiradfahrzeug nach Anspruch 5, **dadurch gekennzeichnet, daß** der Übertragungsmechanismus aus einem Seiltrieb besteht, wobei
- am Lenker (6) eine Seiltrommel (12) befestigt ist,
- am Drehgelenk (5) eine Seilrolle (13) und am vorderen Rahmen (1) zwischen Drehgelenk (5) und Seiltrommel (12) eine Seil-umlenkrolle (14) angebracht ist,
- das Seil (10) an einem Seilfestpunkt (11) mit beiden Enden befestigt ist und
- das Seil (10) vom Seilfestpunkt (11) über die Seilrolle (13), die Seilumlenkrolle (14) und die Seiltrommel (12) und zurück geführt wird, wobei das Seil (10) zwischen Seilrolle (13) und seilumlenkrolle (14) kreuzt.

7. Dreiradfahrzeug nach einem der Ansprüche 1 bis 6, **dadurch gekennzeichnet, daß** der Sitz (7) am Schwenkarm (8) stufenlos verstellbar angeordnet ist.

8. Dreiradfahrzeug nach einem der Ansprüche 1 bis 7, **dadurch gekennzeichnet, daß** der hintere Rahmen (2) lösbar mit dem Drehgelenk (5) verbunden ist.

9. Dreiradfahrzeug nach einem der Ansprüche 1 bis 8, **dadurch gekennzeichnet, daß** die Hinterräder so geneigt angeordnet sind, daß sie an der Unterseite einen größeren Abstand aufweisen als auf der Oberseite.

## Claims

1. Three-wheeled vehicle with a front frame (1) for holding a front wheel (3) and a steering device (6), a rear frame (2) for holding two rear wheels (4), in which the front frame (1) and the rear frame (2) are connected with a swivel-joint (5), and at least one seat (7), characterised in that the seat (7) is arranged on a swivel arm (8), which is connected with a rear swivel arm joint (15) with the rear frame (2) and with a front swivel arm joint (16) with the steering device (6).

2. Three-wheeled vehicle according to claim 1, characterised in that the rear swivel arm joint (15) is formed as a swivel-joint and the front swivel arm joint (16e) as a turning and sliding joint.

3. Three-wheeled vehicle according to claim 2, characterised in that the swivel-joint (5) and the rear swivel arm joint (15) are so attached that their axis of rotation lies within the triangle connecting the mid-points of the three wheels and that the axis of rotation are inclined towards the rear.

4. Three-wheeled vehicle according to one of the claims 1 to 3, characterised in that the front wheel (3) is connected with a pedal crank mechanism that is arranged in front of the front wheel (3).

5. Three-wheeled vehicle according to one of the claims 1 to 4, characterised in that the steering movement of the steering device (6) is transmitted with the aid of a transmission mechanism into a swivelling movement of the front frame with respect to the rear frame.

6. Three-wheeled vehicle according to claim 5, characterised in that the transmission mechanism consists of a rope drive, in which
- a rope drum (12) is fixed to the steering device (6),
- a rope pulley (13) is attached to the swivel-joint (5) and a rope deflection pulley (14) is attached to the front frame (1) between swivel-joint (5) and rope drum (12),
- the rope (10) is fixed to a rope fastening point (11) with both ends and
- the rope (10) is led from the rope fastening point (11) through the rope pulley (13), the rope deflection pulley (14) and the rope drum (12) and back, in which the rope crosses between rope pulley (13) and rope deflection pulley (14).

7. Three-wheeled vehicle according to one of the claims 1 to 6, characterised in that the seat 7 arranged at the swivel arm 8 is continuously adjustable.

8. Three-wheeled vehicle according to one of the claims 1 to 7, characterised in that the rear frame (2) is detachably connected with the swivel-joint (5).

9. Three-wheeled vehicle according to one of the claims 1 to 8, characterised in that the rear wheels are so obliquely arranged that they have a greater spacing at the under surface than at the top surface.

## Revendications

1. Tricycle à cadre avant (1) pour la fixation d'une roue avant (3) et d'un guidon (6), à cadre arrière (2) pour la fixation de deux roues arrière (4), le cadre avant (1) et le cadre arrière (2) étant reliés par une articulation à charnière (5), et à une selle (7) au moins, **caractérisé en ce que** la selle (7) est disposée sur un bras oscillant (8) relié au cadre arrière (2) par une articulation arrière du bras oscillant (15) et au guidon (6) par une articulation avant du bras oscillant (16).

2. Tricycle selon revendication 1, **caractérisé en ce que** l'articulation arrière du bras oscillant (15) est formée comme articulation à charnière et que l'articulation avant du bras oscillant (16) est formée comme joint articulé et cylindrique.

3. Tricycle selon revendication 2, **caractérisé en ce que** l'articulation à charnière (5) et l'articulation arrière du bras oscillant (15) sont positionnées en sorte que leurs axes de pivotement sont situés à l'intérieur du triangle formé par les centres des trois roues, et en ce que les axes de pivotement sont inclinés vers l'arrière.

4. Tricycle selon l'une des revendications 1 à 3, **caractérisé en ce que** la roue avant (3) est reliée à un pédalier placé avant la roue avant (3).

5. Tricycle selon l'une des revendications 1 à 4, **caractérisé en ce que** les mouvements du guidon (6) sont convertis par un mécanisme de conversion en pivotement du cadre avant par rapport au cadre arrière.

6. Tricycle selon revendication 5, **caractérisé en ce que** le mécanisme de conversion consiste en une transmission par câble, où
- un tambour à câble (12) est fixé sur le guidon (6),
- une poulie (13) est placée sur l'articulation à charnière (5) et une poulie de dérivation (14) est disposée sur le cadre avant (1) entre l'articulation à charnière (5) et le tambour de câble (12),
- le câble (10) est fixé sur un point fixe (11) par ses deux extrémités
- le câble (10) est depuis le point fixe (11) guidé sur la poulie (13), la poulie de dérivation (14) et le tambour de câble (12), et retourne du tambour de câble au point fixe, étant croisé entre la poulie (13) et la poulie de dérivation (14).

7. Tricycle selon l'une des revendications 1 à 6, **caractérisé en ce que** le réglage de la selle (7) disposée sur le bras oscillant (8) est effectué sans crans de réglage.

8. Tricycle selon l'une des revendications 1 à 7, **caractérisé en ce que** le cadre arrière (2) peut être disjoint de l'articulation à charnière (5) à laquelle il est relié.

9. Tricycle selon l'une des revendications 1 à 8, **caractérisé en ce que** les roues arrière sont inclinées de manière à présenter entre leurs bases un écartement supérieur à l'écartement au sommet.
